# FASCICULE DE BREVET EUROPEEN

(11) **EP 3 016 500 B1**
(45) Date de publication et mention de la délivrance du brevet: **13.06.2018**
(21) Numéro de dépôt: 14745204.9
(22) Date de dépôt: 02.07.2014
(51) Int. Cl.: A01G 23/14

(54) **DISPOSITIF DE RÉCUPÉRATION DE LA SUBSTANCE AQUEUSE D'UN ARBRE ET PROCÉDÉ POUR SA MISE EN OEUVRE DANS LE GEMMAGE**
VORRICHTUNG ZUR GEWINNUNG EINES WÄSSRIGEN STOFFES AUS EINEM BAUM UND VERFAHREN ZUR IMPLEMENTIERUNG DAVON IN DER HARZGEWINNUNG
DEVICE FOR RECOVERING THE AQUEOUS SUBSTANCE FROM A TREE AND METHOD FOR IMPLEMENTING SAME IN RESIN EXTRACTION

(30) Priorité: 04.07.2013 FR 1356542
(43) Date de publication de la demande: 11.05.2016
(73) Titulaire: Forest Invest, 25000 Besançon (FR)
(72) Inventeur: SEGOUIN, Olivier, F-25000 Besançon (FR); LACLEF, Franck, F-25000 Besançon (FR)
(74) Mandataire: Novagraaf Technologies
(86) Numéro de dépôt international: PCT/FR2014/051699
(87) Numéro de publication internationale: WO 2015/001259

(56) Documents cités:
- CA-A1- 2 305 862
- CA-A1- 2 762 993
- FR-A- 370 168
- FR-A1- 2 746 582

## Description

### Domaine technique

La présente invention concerne un dispositif de récupération de la substance aqueuse d'un arbre.

Il pourra s'agir de la récolte de la résine de pin ou gemmage, mais également de toute autre substance, comme la sève, le latex, etc.

### Etat de la technique

Plus particulièrement dans le domaine du gemmage, il est connu de récolter la résine des pins en effectuant une entaille dans l'écorce jusqu'à l'aubier, de manière à créer un afflux de résine dans cette zone.

Pour mémoire, l'aubier constitue le bois vivant de l'arbre, derrière, dans l'ordre, l'écorce, le liber et le cambium.

Antérieurement, la résine était récoltée dans des pots en terre cuite, à l'air libre, et pour éviter la cristallisation de la résine, l'entaille était recouverte d'acide sulfurique, avec les dangers que cela présente.

Mais ces moyens artisanaux ont été remplacés par des moyens plus sophistiqués décrits dans le brevet français N° 2 746 582. Ceux-ci consistent à remplacer les pots par des poches en matière plastique souple, s'appliquant sur l'entaille par l'intermédiaire d'une pâte neutre, et en l'agrafant tout simplement sur l'écorce environnante, autour de l'entaille. Un autre dispositif de récupération est connu du document FR-A-370 168. Néanmoins, cela présente un certain nombre d'inconvénients, à savoir au niveau de l'agrafage qui prend du temps et fait couler de la résine en dehors de la poche. De plus, la récupération de la résine contenue dans la poche est difficile car collante. Egalement, une partie de la résine (partie gazeuse) s'évapore de la poche en créant naturellement une réaction chimique. Enfin, la poche est à usage unique et crée un déchet non recyclable.

### Description de l'invention

La présente invention a pour but de remédier à ces inconvénients et concerne à cet effet un dispositif de récupération de la substance aqueuse d'un arbre s'effectuant en vase clos, par l'intermédiaire d'un récipient appliqué devant une entaille préalablement effectuée dans l'écorce de l'arbre jusqu'au cambium, se composant d'un bocal rigide fermé par un couvercle hermétiquement relié à un conduit, à l'extrémité duquel est agencé une tête collectrice et appliquée sur le fond d'un trou circulaire, de dimensions sensiblement correspondantes, préalablement réalisé sur l'arbre jusqu'au cambium, caractérisé en ce que d'une part la tête collectrice comporte, sur sa partie supérieure externe, à proximité de son bord d'extrémité supérieure, une pluralité de crampons, hérissés radialement et destinés à s'ancrer au montage sur la partie latérale interne supérieure du trou, à proximité du fond de celui-ci, pour le maintien en place de l'ensemble du dispositif, et en ce que d'autre part, elle est réalisée dans une matière plastique déformable élastiquement et présente une forme ellipsoïdale, dont sa dimension selon son grand axe, disposé verticalement au montage, est supérieure au diamètre du trou de gemmage, et dont sa dimension, selon son petit axe disposé horizontalement, est inférieure au diamètre dudit trou de gemmage, de manière à faciliter l'introduction puis l'ancrage des crampons disposés de part et d'autre de l'axe vertical, par écrasement de la tête dans ce sens et permettre à celle-ci de coopérer étroitement avec la paroi latérale du trou, dans un but d'étanchéité, en relâchant la pression d'écrasement sur la tête, après l'introduction.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :

### Brève description des figures

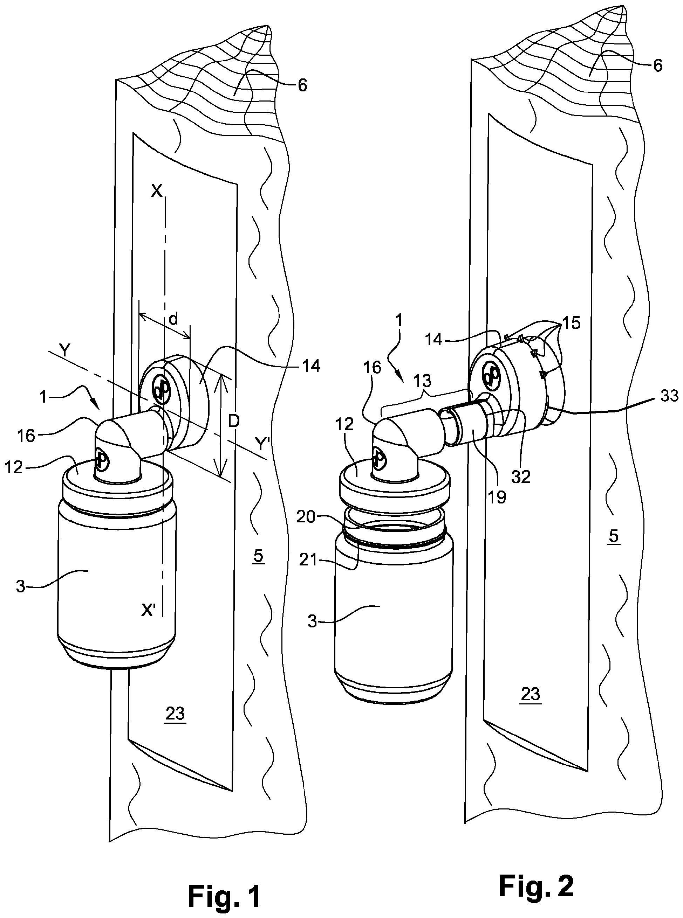

- La figure 1 représente, en perspective, un dispositif de récupération selon l'invention, en situation de récolte sur un arbre.
- La figure 2 représente un dispositif selon la figure 1, en cours de montage d'un bocal vide ou de démontage d'un bocal plein.

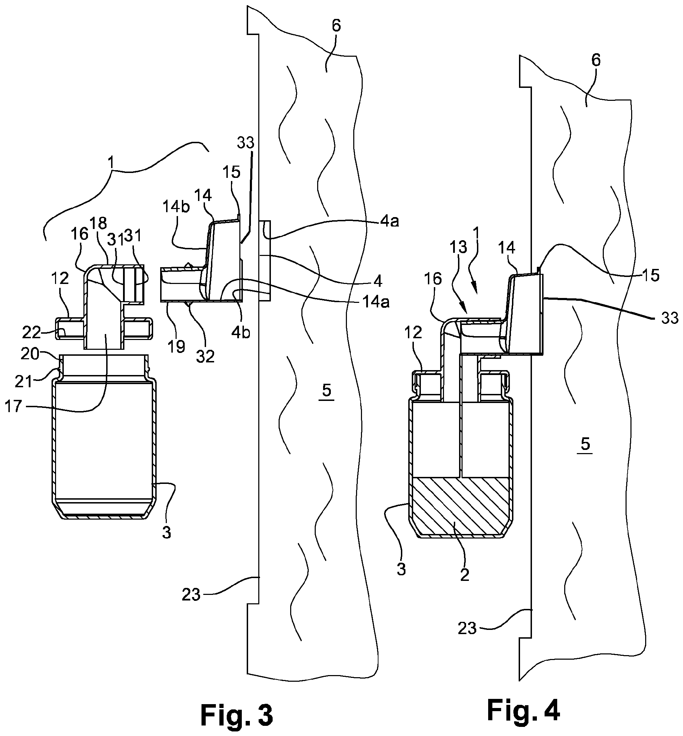

- La figure 3 représente une vue éclatée et en coupe des composants du dispositif de récupération.
- La figure 4 représente une vue selon la figure 3, après assemblage des composants, et montrant une récolte.
- Les figures 5 à 13 montrent toutes les phases d'un procédé pour la mise en oeuvre du dispositif selon les figures 1 à 4, dans une application à la récolte de la résine, dont :

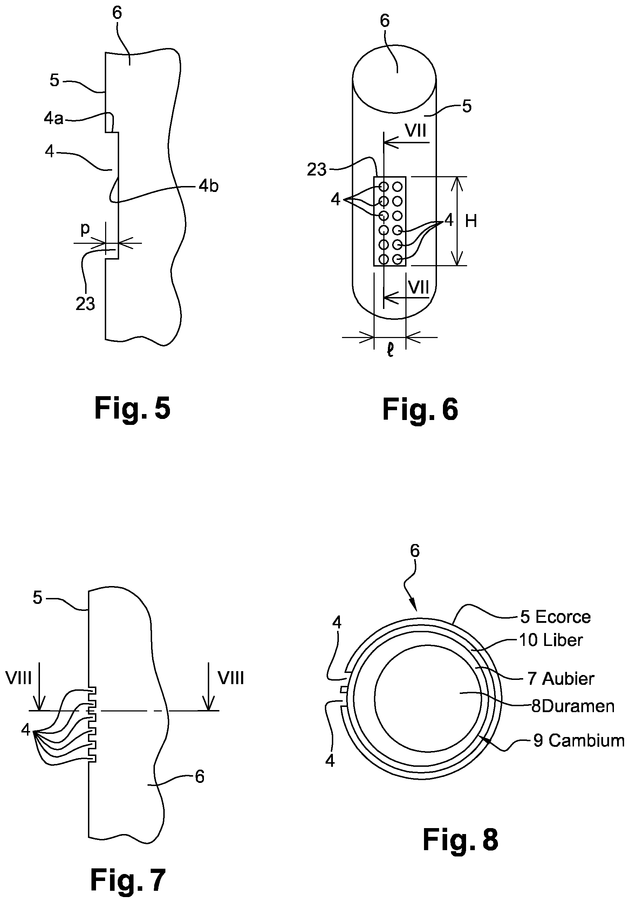

- La figure 5 représente une vue schématique d'une portion d'arbre, en coupe longitudinale, montrant une première opération de planage de l'écorce, irrégulière à l'origine.
- La figure 6 représente une vue frontale schématique de l'arbre dans la zone de planage dans laquelle ont été réalisés une pluralité de trous de gemmage.
- La figure 7 représente une vue en coupe, selon la ligne VII-VII de la figure 6.
- La figure 8 représente une vue en coupe transversale d'un arbre, selon la ligne VIII-VIII de la figure 7, rappelant par ailleurs la structure d'un arbre.

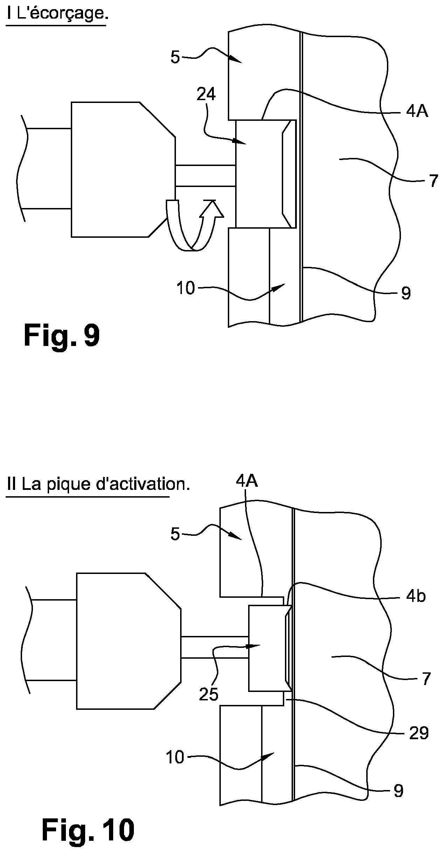

- La figure 9 montre, en coupe schématique, la première phase du procédé, dite « d'écorchage », selon les figures 6 et 7, consistant à fraiser l'écorce sans attaquer le cambium, selon un premier diamètre prédéterminé.
- La figure 10 montre, en coupe schématique, une seconde phase du procédé, dite « pique d'activation », consistant à contrefraiser le liber, selon un second diamètre inférieur au précédent, sans attaquer le cambium et sans attaquer cette zone réduite.

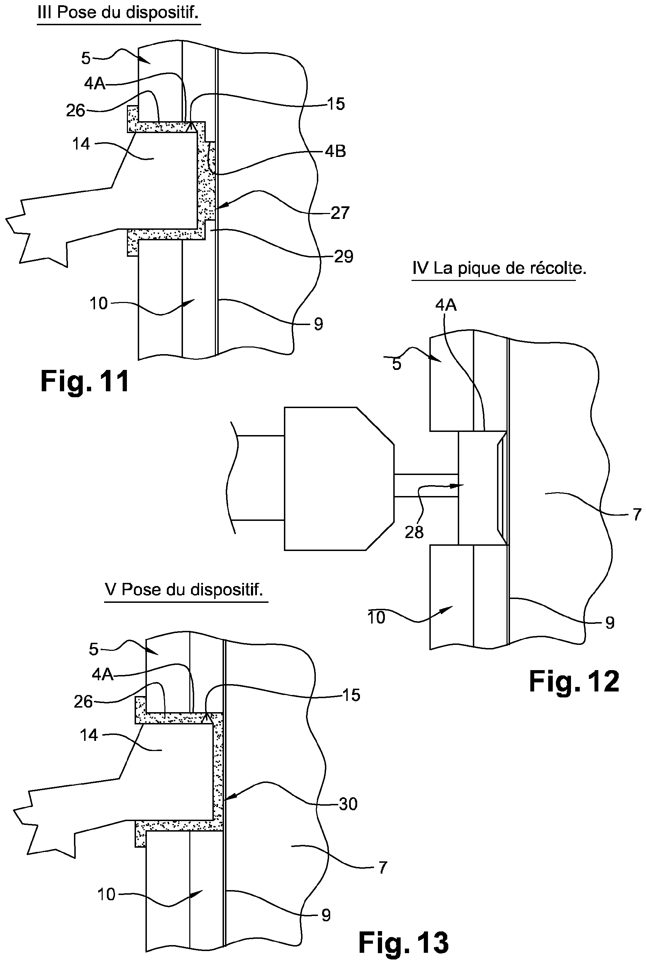

- La figure 11 montre, en coupe schématique, une troisième phase du procédé, dite « pose du dispositif », s'effectuant après application d'une pâte neutre dans le trou, pour venir en contact de l'aubier dans la zone réduite, la surface latérale des deux trous ainsi étagés et sur l'écorce autour du trou de plus grand diamètre.
- La figure 12 montre, en coupe schématique, une quatrième phase du procédé, dite « pique de récolte », consistant à contrefraiser le premier trou, de plus grand diamètre, autour du second trou, de plus petit diamètre, en attaquant le liber, sans attaquer l'aubier dans cette zone élargie.
- La figure 13 montre, en coupe schématique, une cinquième phase du procédé, dite « pose du dispositif », s'effectuant après application d'une seconde couche de pâte neutre dans le trou, pour venir en contact avec l'aubier dans la zone élargie, la surface latérale du trou de plus grand diamètre, devenu unique et sur l'écorce autour dudit trou.

### Description détaillée

Le dispositif de récupération 1 globalement désigné sur les figures est destiné à recueillir toutes substances aqueuses 2, telles que sève, latex et résine selon le présent cas d'application.

De manière connue, cette opération s'effectue en vase clos par l'intermédiaire d'un récipient 3 appliqué devant une entaille 4 pratiquée dans l'écorce 5 de l'arbre 6, jusqu'au cambium 9.

Comme le montre la figure 8, un arbre 6 est formé des strates successifs suivants, à partir du coeur : le duramen 8, l'aubier 7, le cambium 9, le liber 10, l'écorce 5.

Selon l'invention, le dispositif 1 se compose d'un bocal rigide 3 fermé par un couvercle 12 hermétiquement relié à un conduit 13, à l'extrémité duquel est agencé une tête collectrice 14 et appliquée sur le fond d'un trou circulaire 4, de dimensions sensiblement correspondantes, préalablement réalisé sur l'arbre 6 jusqu'au cambium 9.

Selon une caractéristique de la tête 14, celle-ci comporte sur sa partie supérieure externe, à proximité de son bord d'extrémité supérieure, une pluralité de crampons 15, hérissés radialement et destinés à s'ancrer au montage sur la partie latérale interne supérieure 4a du trou 4, à proximité du fond 4b de celui-ci 4, pour le maintien en place de l'ensemble du dispositif 1.

En outre, la tête collectrice 14 comporte, sur son bord périphérique supérieur, une échancrure semi-ellipsoïdale 33 réalisée au niveau des crampons 15. Cette échancrure est d'une épaisseur de quelques dixièmes de millimètres jusqu'à quelques millimètres.

Cette échancrure permet de ne pas écraser le cambium de la pique réalisée, ni les tissus de sa périphérie, recueillant ainsi, par gravité, la résine liquide coulant depuis la zone du pourtour semi-circulaire supérieure de la pique traitée.

Selon une autre caractéristique de l'invention, la tête collectrice 14 est réalisée dans une matière plastique déformable élastiquement et présente une forme ellipsoïdale, dont sa dimension « D » selon son grand axe XX', disposé verticalement au montage, est supérieure au diamètre du trou de gemmage 4, et dont sa dimension « d », selon son petit axe YY' disposé horizontalement, est inférieure au diamètre dudit trou de gemmage 4, de manière à faciliter l'introduction puis l'ancrage des crampons 15 disposés de part et d'autre de l'axe vertical XX'. Ceci s'effectue par écrasement de la tête 14 dans ce sens et permet à celle-ci de coopérer étroitement avec la paroi latérale 4a du trou 4, dans un but d'étanchéité, en relâchant la pression d'écrasement sur la tête 4, après l'introduction.

A titre d'exemple, pour un trou 4 de 70 mm, la tête 14 aura les dimensions «D » = 73 mm et « d » = 68 mm.

Le conduit 13 reliant le couvercle 12 du bocal 3 à la tête collectrice 14 est constitué de deux parties emboîtables l'une dans l'autre, une première partie formant un coude 16, dont une extrémité inférieure verticale 17 est solidaire du couvercle 12 et plonge librement dans le bocal 3, et l'autre horizontale présente un manchon 18 destiné à coopérer par emboitement avec une extrémité libre correspondante de la seconde partie, formant un tube 19. Celui-ci est issu d'une zone inférieure 14a de la face externe 14b de la tête 14 et débouchant dans celle-ci.

Le raccordement du manchon 18 avec le tube 19 s'effectue hermétiquement, par l'intermédiaire d'au moins un bourrelet périphérique externe 31 du manchon 18, apte à s'encliqueter et à coopérer avec un bourrelet périphérique interne 32 du tube 19.

Préférentiellement, le bocal 3 est en verre, dont le col 20 comporte des moyens de fixation 21 le rendant amovible, aptes à coopérer hermétiquement avec des moyens complémentaires 22 du couvercle 12.

Ainsi le collecteur 14 et le couvercle boitier 12 s'assemblent de manière ajustée pour que le collecteur 14 se place au centre de l'ouverture du couvercle 12.

L'invention concerne également le procédé pour la mise en oeuvre du dispositif qui vient d'être décrit, trouvant une application particulière dans la récolte de la résine de pin.

Dans ce cas, le gemmage s'effectue selon les étapes suivantes :
- planage 23 de l'écorce 5 de l'arbre 6 ;
- réalisation par fraisages successifs 24,25 d'au moins deux trous circulaires étagés 4A,4B, de diamètres différents (fig. 9 et 10) : le premier 4A, le plus grand 24, étant de diamètre sensiblement égal à celui de la tête collectrice 14 et de profondeur telle à attaquer une partie du liber 10; le second 4B, le plus petit, réalisé dans l'axe du premier à partir du fond de celui-ci, étant de profondeur telle à percer complètement le liber 10, sans attaquer le cambium 9 et l'aubier 7 ;
- application dans les trous de gemmage 4A,4B d'une pâte neutre activante anticristallisante 26 (fig. 11) ;
- mise en place de la tête collectrice 14 (fig. 11) du dispositif de récupération 1 de la résine 2, dans le premier trou 4A de même diamètre, pour une première pique d'activation 27 dans la surface du plus petit trou 4B, pendant une période prédéfinie ;
- au terme de cette période, dépose du dispositif de récupération 1 et récolte ;
- contrefraisage 28 de la couronne 29 (fig. 12) formée entre les premier trou 4A et second trou 4B, jusqu'au fond de ce dernier en attaquant le liber subsistant 10, sans attaquer le cambium 9 et l'aubier 7 ;
- pose d'une nouvelle couche de pâte neutre 26 (fig. 13), dans le nouveau trou 4A de surface plus grande ;
- mise en place de la tête collectrice 14 (fig. 13) dans le trou 14A, pour une seconde pique d'activation 30 sur toute la surface de celui-ci pendant une nouvelle période prédéfinie ;
- au terme de cette période, dépose du dispositif 1 et nouvelle récolte de la résine 2.

Les essais ont démontré que de bons résultats étaient obtenus lorsque le premier trou 4A de plus grand diamètre est d'un diamètre compris entre 50 mm et 80 mm, et d'une profondeur initiale au moins égale à celle de l'écorce 5, et que le second trou 4B, contrefraisé 25 à partir du fond du premier 4A, est d'un diamètre compris entre 40 mm et 70 mm, et de profondeur telle à atteindre le cambium 9 sans l'attaquer.

Il est à noter ici que, selon ce procédé, la résine 2, en s'écoulant de la pique, entraîne avec elle les tanins et impuretés présents. Les impuretés sont retenues par la pâte neutre et les tanins sont présents généralement en grande quantité dans l'écorce. Le collecteur 14 venant s'appliquer sur le liber vivant 10 (pique à 50) ou sur le cambium 9 (pique à 70), la résine 2 n'est pas en contact avec l'écorce chargée en tanins. La résine 2 reste donc incolore.

Du fait de l'agencement du collecteur 14 par rapport au couvercle 12 décrit ci-dessus, la résine s'écoule directement du collecteur 14 dans le récipient 3. Cet écoulement direct permet de limiter la cristallisation ou la précipitation de la partie solide de la résine.

Selon un autre avantage, le collecteur 14, sur sa partie appliquée contre la pique, du fait de sa forme ellipsoïdale, n'a pas la même forme en haut et en bas. La partie haute la plus courte ne vient donc pas s'appliquer contre le liber 10 ou le cambium 9. Les tissus producteurs de résine 2 ne sont ainsi pas écrasés par le collecteur 14 et l'écoulement de la résine 2 peut se faire naturellement.

Avantageusement, une solution liquide adaptée est déposée dans le pot recueillant la résine. La quantité est adaptée à la météo ou à la saison pour que la résine 2 soit bloquée rapidement dans son processus de précipitation, voire de cristallisation. Le principe actif de cette solution permet de garder la résine 2 pure et naturelle.

Optionnellement, un troisième trou étagé (non représenté) est réalisé entre le premier 4A et le deuxième 4B, permettant le prélèvement en trois étapes, attaquant le liber 10, selon trois zones concentriques, sans attaquer le cambium 9 et l'aubier 7, de manière à prolonger la récolte dans le temps.

Pour des questions de productivité, le gemmage s'effectue simultanément, dans deux trous 4 réalisés côte à côte.

Pratiquement, la zone de planage 23 de l'écorce 5 est de dimensions telles à pouvoir y réaliser une pluralité de paires de trous identiques 4, alignés verticalement, ceux-ci étant gemmés deux par deux, successivement selon un cycle prédéterminé.

La zone de planage 23 de l'écorce 5 comporte six paires de trous de gemmage 4 exploités deux par deux, successivement.

La zone de planage 23 de l'écorce 5 forme une fenêtre rectangulaire de hauteur « H » de 480 mm et de largeur « l » de 200 mm, sur une profondeur allant de 1 à 5 cm.

Les trous de gemmage 4 sont espacés de 25 mm, dans le sens de la hauteur et dans le sens de la largeur.

De préférence, la période de pique d'activation 27 est de sept jours au moins, suivie de la pique de récolte 30 qui est d'une période de 21 jours au plus, soit 3 semaines x 6 séries de 2 trous = 18 semaines de récolte.

## Revendications

1. Dispositif de récupération (1) de la substance aqueuse (2) d'un arbre s'effectuant en vase clos, par l'intermédiaire d'un récipient appliqué devant une entaille (4) préalablement effectuée dans l'écorce (5) de l'arbre (6) jusqu'au cambium (9), se composant d'un bocal rigide (3) fermé par un couvercle (12) hermétiquement relié à un conduit (13), à l'extrémité duquel est agencé une tête collectrice (14) et appliquée sur le fond d'un trou circulaire (4), de dimensions sensiblement correspondantes, préalablement réalisé sur l'arbre (6) jusqu'au cambium (9), **caractérisé en ce que** d'une part la tête collectrice (14) comporte, sur sa partie supérieure externe, à proximité de son bord d'extrémité supérieure, une pluralité de crampons (15), hérissés radialement et destinés à s'ancrer au montage sur la partie latérale interne supérieure (4a) du trou (4), à proximité du fond (4b) de celui-ci (4), pour le maintien en place de l'ensemble du dispositif (1), et **en ce que** d'autre part, elle est réalisée dans une matière plastique déformable élastiquement et présente une forme ellipsoïdale, dont sa dimension (D) selon son grand axe (XX'), disposé verticalement au montage, est supérieure au diamètre du trou de gemmage (4), et dont sa dimension (d), selon son petit axe (YY') disposé horizontalement, est inférieure au diamètre dudit trou de gemmage (4), de manière à faciliter l'introduction puis l'ancrage des crampons (15) disposés de part et d'autre de l'axe vertical (XX'), par écrasement de la tête (14) dans ce sens et permettre à celle-ci de coopérer étroitement avec la paroi latérale (4a) du trou (4), dans un but d'étanchéité, en relâchant la pression d'écrasement sur la tête (4), après l'introduction.

2. Dispositif selon la revendication 1, **caractérisé en ce que** la tête collectrice (14) comporte, sur son bord périphérique supérieur, une échancrure semi-ellipsoïdale (33) réalisée au niveau des crampons (15).

3. Dispositif selon les revendications 1 ou 2, **caractérisé en ce que** le conduit (13) reliant le couvercle (12) du bocal (3) à la tête collectrice (14) est constitué de deux parties emboitables l'une dans l'autre, une première partie formant un coude (16), dont une extrémité inférieure verticale (17) est solidaire du couvercle (12) et plonge librement dans le bocal (3), et l'autre horizontale présente un manchon (18) destiné à coopérer par emboitement avec une extrémité libre correspondante de la seconde partie, formant un tube (19) issu d'une zone inférieure (14a) de la face externe (14b) de la tête (14) et débouchant dans celle-ci.

4. Dispositif selon la revendication 3, **caractérisé en ce que** le raccordement du manchon (18) avec le tube (19) s'effectue hermétiquement, par l'intermédiaire d'au moins un bourrelet périphérique externe (31) du manchon (18), apte à s'encliqueter et à coopérer avec un bourrelet périphérique interne (32) du tube (19).

5. Procédé pour la mise en oeuvre du dispositif selon l'une des revendications 1 à 4, appliqué à la récolte de la résine du pin, **caractérisé en ce que** le gemmage s'effectue selon les étapes suivantes :
- planage (23) de l'écorce (5) de l'arbre (6) ;
- réalisation par fraisages successifs (24,25) d'au moins deux trous circulaires étagés (4A,4B), de diamètres différents : le premier (4A), le plus grand (24), étant de diamètre sensiblement égal à celui de la tête collectrice (14) et de profondeur telle à attaquer une partie du liber (10), sans attaquer le cambium (9) ; le second (4B), le plus petit, réalisé dans l'axe du premier à partir du fond de celui-ci, étant de profondeur telle à attaquer le liber (10), sans attaquer le cambium (9) et l'aubier (7) ;
- application dans les trous de gemmage (4A,4B) d'une pâte neutre activante anticristallisante (26) ;
- mise en place de la tête collectrice (14) du dispositif de récupération (1) de la résine (2), dans le premier trou (4A) de même diamètre, pour une première pique d'activation (27) dans la surface du plus petit trou (4B), pendant une période prédéfinie ;
- au terme de cette période, dépose du dispositif de récupération (1) et récolte ;
- contrefraisage (28) de la couronne (29) formée entre les premier trou (4A) et second trou (4B), jusqu'au fond de ce dernier en attaquant le liber subsistant (10), sans attaquer le cambium (9) et l'aubier (7) ;
- pose d'une nouvelle couche de pâte neutre (26), dans le nouveau trou (4A) de profondeur plus grande ;
- mise en place de la tête collectrice (14) dans le trou (14A), pour une seconde pique d'activation (30) sur toute la surface de celui-ci pendant une nouvelle période prédéfinie ;
- au terme de cette période, dépose du dispositif (1) et nouvelle récolte de la résine (2).

6. Procédé selon la revendication 5, **caractérisé en ce que** le premier trou (4A) de plus grand diamètre est d'un diamètre compris entre 50 mm et 80 mm, et d'une profondeur initiale au moins égale à celle de l'écorce (5), le second trou (4B), contrefraisé (25) à partir du fond du premier (4A), étant d'un diamètre compris entre 40 mm et 70 mm, et de profondeur telle à atteindre le cambium (9) sans l'attaquer.

7. Procédé selon l'une des revendications 5 ou 6, **caractérisé en ce qu'**un troisième trou étagé (non représenté) est réalisé entre le premier (4A) et le deuxième (4B), permettant le prélèvement en trois étapes, attaquant le liber (10), selon trois zones concentriques, sans attaquer le cambium (9) et l'aubier (7), de manière à prolonger la récolte dans le temps.

8. Procédé selon l'une des revendications 5 à 7, **caractérisé en ce que** le gemmage s'effectue simultanément, dans deux trous (4) réalisés côte à côte.

9. Procédé selon l'une des revendications 5 à 8, **caractérisé en ce que** la zone de planage (23) de l'écorce (5) est de dimensions telles à pouvoir y réaliser une pluralité de paires de trous identiques (4), alignés verticalement, ceux-ci étant gemmés deux par deux, successivement selon un cycle prédéterminé.

10. Procédé selon la revendication 9, **caractérisé en ce que** la zone de planage (23) de l'écorce (5) comporte six paires de trous de gemmage (4) exploités deux par deux, successivement.

11. Procédé selon l'une des revendications 5 à 10, **caractérisé en ce que** la zone de planage (23) de l'écorce (5) forme une fenêtre rectangulaire de hauteur (H) de 480 mm et de largeur (l) de 200 mm, sur une profondeur de 1 à 5 cm.

12. Procédé selon la revendication 11, **caractérisé en ce que** les trous de gemmage (4) sont espacés de 25 mm, dans le sens de la hauteur et dans le sens de la largeur.

13. Procédé selon l'une des revendications 5 à 12, **caractérisé en ce que** la période de pique d'activation (27) est de sept jours au moins, suivie de la pique de récolte (30) qui est d'une période de 21 jours au plus, soit 3 semaines x 6 séries de 2 trous = 18 semaines de récolte.

## Patentansprüche

1. Vorrichtung zum in Vakuum erfolgenden Gewinnen (1) der wässrigen Substanz (2) eines Baumes mittels eines Behälters, der vor einem Einschnitt (4) angebracht wird, welcher zuvor in der Rinde (5) des Baumes (6) bis zum Kambium (9) angefertigt wurde, bestehend aus einem starren Gefäß (3), das durch einen Deckel (12) verschlossen ist, welcher hermetisch mit einer Leitung (13) verbunden ist, an deren Ende ein Sammelkopf (14) angeordnet ist und die am Boden eines kreisrunden Loches (4) von im Wesentlichen entsprechenden Abmessungen, welches zuvor am Baum (6) bis zum Kambium (9) ausgeführt wurde, angebracht ist, **dadurch gekennzeichnet, dass** der Sammelkopf (14) einerseits an seinem oberen äußeren Teil in der Nähe seiner oberen Endkante eine Vielzahl von Dornen (15) umfasst, die radial abstehen und dazu vorgesehen sind, sich beim Montieren am seitlichen oberen Innenteil (4a) des Loches (4) in der Nähe des Bodens (4b) desselben (4) zu verankern, zum Halten der Gesamtheit der Vorrichtung (1) an Ort und Stelle, und dadurch, dass er andererseits aus einem elastisch verformbaren Kunststoffmaterial ausgeführt ist und eine ellipsoide Form aufweist, deren Abmessung (D) gemäß ihrer großen Achse (XX'), die beim Montieren vertikal angeordnet wird, größer ist als der Durchmesser des Zapfloches (4), und deren Abmessung (d) gemäß ihrer horizontal angeordneten kleinen Achse (YY') kleiner ist als der Durchmesser des Zapfloches (4), um das Einführen und danach das Verankern der beidseits der vertikalen Achse (XX') angeordneten Dornen (15) durch Stauchen des Kopfes (14) in dieser Richtung zu erleichtern und es demselben zu ermöglichen, zum Zwecke der Dichtigkeit eng mit der Seitenwand (4a) des Loches (4) zusammenzuwirken, indem nach dem Einführen der Stauchungsdruck auf den Kopf (4) gelöst wird.

2. Vorrichtung nach Anspruch 1, **dadurch gekennzeichnet, dass** der Sammelkopf (14) an seinem oberen Umfangsrand eine halbellipsoide Aussparung (33) umfasst, die auf Ebene der Dornen (15) ausgeführt ist.

3. Vorrichtung nach den Ansprüchen 1 oder 2, **dadurch gekennzeichnet, dass** die Leitung (13), die den Deckel (12) des Gefäßes (3) mit dem Sammelkopf (14) verbindet, aus zwei ineinandersteckbaren Teilen besteht, wobei ein erster Teil ein Knie (16) bildet, von dem ein unteres vertikales Ende (17) fest mit dem Deckel (12) verbunden ist und frei in das Gefäß (3) eintaucht, und das andere, horizontale, eine Stutzen (18) aufweist, der dazu vorgesehen ist, durch Zusammenstecken mit einem entsprechenden freien Ende des zweiten Teils zusammenzuwirken, welcher ein Rohr (19) bildet, das aus einem unteren Bereich (14a) der Außenfläche (14b) des Kopfes (14) hervorgeht und in denselben mündet.

4. Vorrichtung nach Anspruch 3, **dadurch gekennzeichnet, dass** der Anschluss des Stutzens (18) an das Rohr (19) hermetisch erfolgt mittels mindestens eines äußeren Umfangswulstes (31) des Stutzens (18), der in der Lage ist, mit einem inneren Umfangswulst (32) des Rohres (19) zu verrasten und zusammenzuwirken.

5. Verfahren zum Einsatz der Vorrichtung nach einem der Ansprüche 1 bis 4, die zur Ernte des Harzes der Kiefer angebracht wird, **dadurch gekennzeichnet, dass** das Abzapfen gemäß den folgenden Schritten erfolgt:
- Richten (23) der Rinde (5) des Baumes (6);
- Ausführen, durch aufeinanderfolgende Fräsungen (24, 25), von mindestens zwei gestuften kreisrunden Löchern (4A, 4B) von unterschiedlichen Durchmessern: wobei das erste (4A), größere (24), von im Wesentlichem gleichem Durchmesser wie demjenigen des Sammelkopfes (14) und solcher Tiefe ist, dass es einen Teil des Bastes (10) angreift, ohne das Kambium (9) anzugreifen; wobei das zweite (4B), kleinere, das in der Achse des ersten vom Boden desselben ausgehend ausgeführt ist, von solcher Tiefe ist, dass es den Bast (10) angreift, ohne das Kambium (9) und das Splintholz (7) anzugreifen;
- Anbringen einer neutralen, aktivierenden Kristallisationsschutzpaste (26) in den Zapflöchern (4A, 4B) ;
- Einbauen des Sammelkopfes (14) der Vorrichtung zum Gewinnen (1) des Harzes (2) in das erste Loch (4A) gleichen Durchmessers, für einen ersten Aktivierungsstich (27) in der Oberfläche des kleineren Loches (4B) während eines vordefinierten Zeitraums;
- am Ende dieses Zeitraums Ausbauen der Gewinnungsvorrichtung (1) und Ernte;
- Gegenfräsen (28) des Kranzes (29), der zwischen dem ersten Loch (4A) und zweiten Loch (4B) gebildet ist, bis zum Boden des letzteren, wobei der verbleibende Bast (10) angegriffen wird, ohne das Kambium (9) und das Splintholz (7) anzugreifen;
- Auftragen einer neuen Schicht Neutralpaste (26) in dem neuen Loch (4A) von größerer Tiefe;
- Einbauen des Sammelkopfes (14) in das Loch (14A), für einen zweiten Aktivierungsstich (30) auf der gesamten Oberfläche desselben während eines neuen vordefinierten Zeitraums;
- am Ende dieses Zeitraums, Ausbauen der Vorrichtung (1) und neuerliche Ernte des Harzes (2).

6. Verfahren nach Anspruch 5, **dadurch gekennzeichnet, dass** das erste Loch (4A) von größerem Durchmesser von einem Durchmesser ist, der zwischen 50 mm und 80 mm beträgt, und von einer anfänglichen Tiefe von mindestens gleich derjenigen der Rinde (5), wobei das ausgehend vom Boden des ersten (4A) gegengefräste (25) zweite Loch (4B) von einem Durchmesser ist, der zwischen 40 mm und 70 mm beträgt, und von solcher Tiefe, dass es das Kambium (9) erreicht, ohne dieses anzugreifen.

7. Verfahren nach einem der Ansprüche 5 oder 6, **dadurch gekennzeichnet, dass** zwischen dem ersten (4A) und dem zweiten (4B) ein drittes gestuftes Loch (nicht dargestellt) ausgeführt wird, das die Entnahme in drei Schritten ermöglicht, wobei der Bast (10) gemäß drei konzentrischen Bereichen angegriffen wird, ohne das Kambium (9) und das Splintholz (7) anzugreifen, um die Ernte zeitlich zu verlängern.

8. Verfahren nach einem der Ansprüche 5 bis 7, **dadurch gekennzeichnet, dass** das Abzapfen gleichzeitig in zwei nebeneinander ausgeführten Löchern (4) erfolgt.

9. Verfahren nach einem der Ansprüche 5 bis 8, **dadurch gekennzeichnet, dass** der Richtbereich (23) der Rinde (5) von solchen Abmessungen ist, dass darin eine Vielzahl von vertikal ausgerichteten, identischen Lochpaaren (4) ausgeführt werden können, wobei diese nacheinander gemäß einem vorbestimmten Zyklus zweierweise abgezapft werden.

10. Verfahren nach Anspruch 9, **dadurch gekennzeichnet, dass** der Richtbereich (23) der Rinde (5) sechs Zapflochpaare (4) umfasst, die zweierweise nacheinander genutzt werden.

11. Verfahren nach einem der Ansprüche 5 bis 10, **dadurch gekennzeichnet, dass** der Richtbereich (23) der Rinde (5) ein rechteckiges Fenster von 480 mm Höhe (H) und von 200 mm Breite (l) auf einer Tiefe von 1 bis 5 cm bildet.

12. Verfahren nach Anspruch 11, **dadurch gekennzeichnet, dass** die Zapflöcher (4) in der Höhenrichtung und in der Breitenrichtung um 25 mm beabstandet sind.

13. Verfahren nach einem der Ansprüche 5 bis 12, **dadurch gekennzeichnet, dass** der Aktivierungsstich-Zeitraum (27) mindestens sieben Tage beträgt, gefolgt vom Erntestich (30), der einen Zeitraum von höchstens 21 Tagen beträgt, was 3 Wochen x 6 Reihen zu 2 Löchern = 18 Erntewochen macht.

## Claims

1. Device for recovering (1) the aqueous substance (2) from a tree to be carried out in a closed vessel, via a container applied in front of a notch (4) previously cut in the bark (5) of the tree (6) to the cambium (9), composed of a rigid jar (3) closed by a cover (12) hermetically linked to a conduit (13), at the end of which a collecting head (14) is arranged and applied to the bottom of a circular hole (4), of substantially matching dimensions, previously made in the tree (6) to the cambium (9), **characterised in that** on the one hand the collecting head (14) comprises, on the top outer portion of same, near to the top edge of same, a plurality of studs (15), standing out radially and intended to be anchored during the mounting on the upper inner lateral portion (4a) of the hole (4), near the bottom (4b) of same (4), in order to hold the whole of the device (1) in place, and **in that** on the other hand, it is made from an elastically deformable plastic material and is ellipsoidal in shape, of which the dimensions (D) of same along the large axis (XX') of same, arranged vertically during the mounting, is greater than the diameter of the tapping hole (4), and of which the dimension (d) of same, along the small axis (YY') of same arranged horizontally, is less than the diameter of said tapping hole (4), in such a way as to facilitate the introduction then the anchoring of studs (15) arranged on either side of the vertical axis (XX'), by crushing of the head (14) in this directions and to allow the latter to closely cooperate with the lateral wall (4a) of the hole (4), for the purpose of a seal, by releasing the crushing pressure on the head (4), after the introduction.

2. Device according to claim 1, **characterised in that** the collecting head (14) comprises, on the upper peripheral edge of same, a semi-ellipsoidal notch (33) made on the studs (15).

3. Device according to claims 1 or 2, **characterised in that** the conduit (13) linking the cover (12) of the jar (3) to the collecting head (14) is formed from two portions that can be nested one in the other, with a first portion forming an elbow (16), of which one vertical lower end (17) is integral with the cover (12) and plunges freely into the jar (3), and the other horizontal has a sleeve (18) intended to cooperate by nesting with a corresponding free end of the second portion, forming a tube (19) coming from a lower zone (14a) of the outer face (14b) of the head (14) and opening into the latter.

4. Device according to claim 3, **characterised in that** the connection of the sleeve (18) with the tube (19) is done hermetically, by the intermediary of at least one outer peripheral bulge (31) of the sleeve (18), able to snap-fit and cooperate with an inner peripheral bulge (32) of the tube (19).

5. Method for implementing the device according to one of claims 1 to 4, applied to the harvesting of the resin of the pine tree, **characterised in that** the tapping is carried out according to the following steps:
- levelling (23) of the bark (5) of the tree (6);
- carrying out by successive milling (24, 25) of at least two tiered circular holes (4A, 4B), with different diameters: the first (4A), the largest (24), having a diameter substantially equal to that of the collecting head (14) and with a depth such as to attack a portion of the liber (10), without attacking the cambium (9); the second (4B), the smallest, carried out in the axis of the first starting from the bottom of the latter, having a depth such as to attack the liber (10), without attacking the cambium (9) and the sapwood (7);
- application in the tapping holes (4A, 4B) of an anti-crystallising activating neutral paste (26);
- setting in place of the collecting head (14) of the recovering device (1) of the resin (2), in the first hole (4A) of the same diameter, for a first activation spike (27) in the surface of the smallest hole (4B), for a predefined period;
- at the end of this period, removal of the recovering device (1) and harvest;
- counter milling (28) of the crown (29) formed between the first hole (4A) and second hole (4B), until the bottom of the latter by attacking the remaining liber (10), without attacking the cambium (9) and the sapwood (7) ;
- installation of a new layer of neutral paste (26), in the new hole (4A) with a greater depth;
- setting in place of the collecting head (14) in the hole (14A), for a second activation spike (30) over the entire surface of the latter for a new predefined period;
- at the end of this period, removal of the device (1) and another harvest of the resin (2).

6. Method according to claim 5, **characterised in that** the first hole (4A) of larger diameter is a diameter between 50 mm and 80 mm, and has an initial depth at least equal to that of the bark (5), with the second hole (4B), counter milled (25) from the bottom of the first (4A), having a diameter between 40 mm and 70 mm, and a depth such as to reach the cambium (9) without attacking it.

7. Method according to one of claims 5 or 6, **characterised in that** a third tiered hole (not shown) is made between the first (4A) and the second (4B), allowing for the sampling in three steps, attacking the liber (10), according to three concentric zones, without attacking the cambium (9) and the sapwood (7), in such a way as to prolong the harvest over time.

8. Method according to one of claims 5 to 7, **characterised in that** the tapping is carried out simultaneously, in two holes (4) made next to each other.

9. Method according to one of claims 5 to 8, **characterised in that** the levelling zone (23) of the bark (5) is of dimensions such as to be able to be carried out therein a plurality of pairs of identical holes (4), vertically aligned, with the latter being tapped two-by-two, successively according to a predetermined cycle.

10. Method according to claim 9, **characterised in that** the levelling zone (23) of the bark (5) comprises six pairs of tapping holes (4) used two-by-two, successively.

11. Method according to one of claims 5 to 10, **characterised in that** the levelling zone (23) of the bark (5) forms a rectangular window with a height (H) of 480 mm and a width (l) of 200 mm, over a depth from 1 to 5 cm.

12. Method according to claim 11, **characterised in that** the tapping holes (4) are spaced apart by 25 mm, height-wise and width-wise.

13. Method according to one of claims 5 to 12, **characterised in that** the activation spike period (27) is at least seven days, followed by the harvest spike (30) which is a period of 21 days at most, which is 3 weeks x 6 series of 2 holes = 18 weeks of harvest.
